# EUROPEAN PATENT APPLICATION

(11) **EP 3 312 065 A1**
(43) Date of publication of application: **25.04.2018**
(21) Application number: 16730002.9
(22) Date of filing: 02.06.2016
(51) Int. Cl.: B60T 8/36

(54) **A BRAKE HYDRAULIC PRESSURE CONTROLLER AND A METHOD FOR MANUFACTURING THE BRAKE HYDRAULIC PRESSURE CONTROLLER**

(30) Priority: 19.06.2015 JP 2015123754
(71) Applicant: Robert Bosch GmbH, 70442 Stuttgart (DE)
(72) Inventor: OGAWA, Takashi, Yokohama-shi Kanagawa 224-8501 (JP); SAGAYAMA, Kosaku, Yokohama-shi Kanagawa 224-8501 (JP)
(86) International application number: PCT/IB2016/053237
(87) International publication number: WO 2016/203333

(57) **Abstract**

A purpose is to obtain a brake hydraulic pressure controller and a method for manufacturing a brake hydraulic pressure controller that realize suppression of manufacturing cost and downsizing of the brake hydraulic pressure controller and simplification of a manufacturing process.

The brake hydraulic pressure controller 1 has: a base body 10 formed with a channel of a hydraulic fluid; plural hydraulic pressure regulating valves 3 provided in the channel; and plural drive coils respectively provided in the plural hydraulic pressure regulating valves 3 and driving the hydraulic pressure regulating valves 3. One end section 15B that constitutes one end side of the drive coil 11 is adhered to an adhesive surface section that constitutes a contour of the base body 10 via a first adhesive member 17A.

## Description

### Technical Field

The invention relates to a brake hydraulic pressure controller and a method for manufacturing a brake hydraulic pressure controller.

### Background Art

Conventionally, when a passenger of a vehicle such as a motorcycle (a two-wheeled motorized vehicle or a three-wheeled motorized vehicle) operates a brake lever, pressure of a hydraulic fluid in a brake fluid circuit that is filled with a brake fluid is boosted, and a braking device of the vehicle can thereby generate a braking force on a wheel. In addition, it has been known to adopt an antilock brake system (ABS) as a brake hydraulic pressure controller that adjusts the braking force for a purpose of increasing safety of a braking operation.

This brake hydraulic pressure controller can boost/reduce the pressure of the hydraulic fluid in the brake fluid circuit and adjust the braking force that is generated on the wheel.

As the brake hydraulic pressure controller, an apparatus in which a pump device for generating the pressure of the hydraulic fluid in the brake fluid circuit, a hydraulic pressure regulating valve for boosting/reducing the pressure of the hydraulic fluid, a control unit for controlling the pump device and the hydraulic pressure regulating valve, and the like are unitized has been available (for example, see PTL 1).

### Citation List

### Patent Literature

PTL 1 JP-A-2011-51359

### Summary of Invention

### Technical Problem

In the conventional brake hydraulic pressure controller, plural drive coils that respectively drive the hydraulic pressure regulating valves for opening/closing operations are integrated as a coil unit and are fixed to a base body that is formed with a channel of the hydraulic fluid by a screw or the like.

Such a mechanical fixation structure by means of the screw or the like complicates structures of the coil unit and the base body, and thus produces problems of increased manufacturing cost of the brake hydraulic pressure controller and enlargement of each member thereof. In addition, in terms of a manufacturing process, there is a problem of increased man-hours due to generation of a screw hole in the base body and of screwing thereto.

The invention has been made with the problems like the above as the background, and therefore has a purpose of obtaining a brake hydraulic pressure controller and a method for manufacturing a brake hydraulic pressure controller that simplify a structure of fixing plural drive coils respectively driving hydraulic pressure regulating valves for opening/closing operations to a base body formed with a channel of a hydraulic fluid and a manufacturing process thereof and that realize suppression of manufacturing cost and downsizing of the brake hydraulic pressure controller.

### Solution to Problem

A brake hydraulic pressure controller according to the invention has: a base body formed with a channel of a hydraulic fluid; plural hydraulic pressure regulating valves provided in the channel; and plural drive coils respectively provided in the plural hydraulic pressure regulating valves and driving the hydraulic pressure regulating valves. One end section that constitutes one end side of each of the drive coils is adhered to an adhesive surface section that constitutes a contour of the base body via a first adhesive member.

In addition, a method for manufacturing a brake hydraulic pressure controller according to the invention includes : a step of accommodating and positioning drive coils of hydraulic pressure regulating valves in a coil casing; a step of applying an adhesive member to a base body formed with a channel of a hydraulic fluid; a step of adhering the base body and the drive coils via the adhesive member; and a step of connecting the base body and the coil casing by a screw and keeping a joined state thereof.

### Advantageous Effects of Invention

The brake hydraulic pressure controller and the method for manufacturing a brake hydraulic pressure controller according to the invention can simplify a fixation structure and a manufacturing process of the base body and the drive coils and realize suppression of manufacturing cost and downsizing. Brief Description of Drawings

[Fig. 1] Fig. 1 is a schematic configuration diagram of a brake hydraulic pressure control system including a brake hydraulic pressure controller according to an embodiment.
[Fig. 2] Fig. 2 is a perspective view of the brake hydraulic pressure controller according to the embodiment.
[Fig. 3] Fig. 3 is a perspective view of the brake hydraulic pressure controller according to the embodiment that is seen at a different angle from Fig. 2.
[Fig. 4] Fig. 4 is an exploded perspective view of the brake hydraulic pressure controller according to the embodiment.
[Fig. 5] Fig. 5 is an exploded perspective view of the brake hydraulic pressure controller according to the embodiment that is seen at a different angle from Fig. 4.
[Fig. 6] Fig. 6 is a plan view in which inside of a coil casing of the brake hydraulic pressure controller according to the embodiment is seen from a first surface section side.
[Fig. 7] Fig. 7 is a perspective view that explains a manufacturing step 1 of the brake hydraulic pressure controller according to the embodiment.
[Fig. 8] Fig. 8 is a perspective view that explains a manufacturing step 2 of the brake hydraulic pressure controller according to the embodiment.
[Fig. 9] Fig. 9 is a perspective view that explains a manufacturing step 3 of the brake hydraulic pressure controller according to the embodiment.
[Fig. 10] Fig. 10 is a perspective view that explains a manufacturing step 4 of the brake hydraulic pressure controller according to the embodiment.
[Fig. 11] Fig. 11 is a plan view of the first surface section side of the coil casing in the manufacturing step 2 of the brake hydraulic pressure controller according to the embodiment.
[Fig. 12] Fig. 12 is a plan view of a second surface section side of the coil casing in the manufacturing step 2 of the brake hydraulic pressure controller according to the embodiment.
[Fig. 13] Fig. 13 is a top view in the manufacturing step 4 (Fig. 10) of the brake hydraulic pressure controller according to the embodiment.
[Fig. 14] Fig. 14 is an A-A cross-sectional view in Fig. 13 of the brake hydraulic pressure controller according to the embodiment.
[Fig. 15 Fig. 15 is a B-B cross-sectional view in Fig. 13 of the brake hydraulic pressure controller according to the embodiment.
[Fig. 16] Fig. 16 is a C-C cross-sectional view in Fig. 13 of the brake hydraulic pressure controller according to the embodiment.
[Fig. 17] Fig. 17 is a D-D cross-sectional view in Fig. 13 of the brake hydraulic pressure controller according to the embodiment.

### Description of Embodiment

A description will hereinafter be made on a brake hydraulic pressure controller and a method for manufacturing a brake hydraulic pressure controller according to the invention by using the drawings. Note that the brake hydraulic pressure controller according to the invention may be used in a vehicle other than a motorcycle (for example, an automobile, a track, or the like).

In addition, each of a configuration, an operation, and the like, which will be described below, is merely one example, and the brake hydraulic pressure controller according to the invention is not limited to a case with such a configuration, such an operation, and the like. For example, the brake hydraulic pressure controller according to the invention may not have a pump device. For example, the brake hydraulic pressure controller according to the invention may perform an operation other than that as an ABS.

Furthermore, in each of the drawings, detailed portions are appropriately simplified or not depicted. Moreover, an overlapping description is appropriately simplified or not made.

### Embodiment

A description will hereinafter be made on a brake hydraulic pressure controller and a method for manufacturing a brake hydraulic pressure controller according to this embodiment.

### <Overall configuration of brake hydraulic pressure control system 100>

First, a description will be made on an overall configuration of a brake hydraulic pressure control system 100.

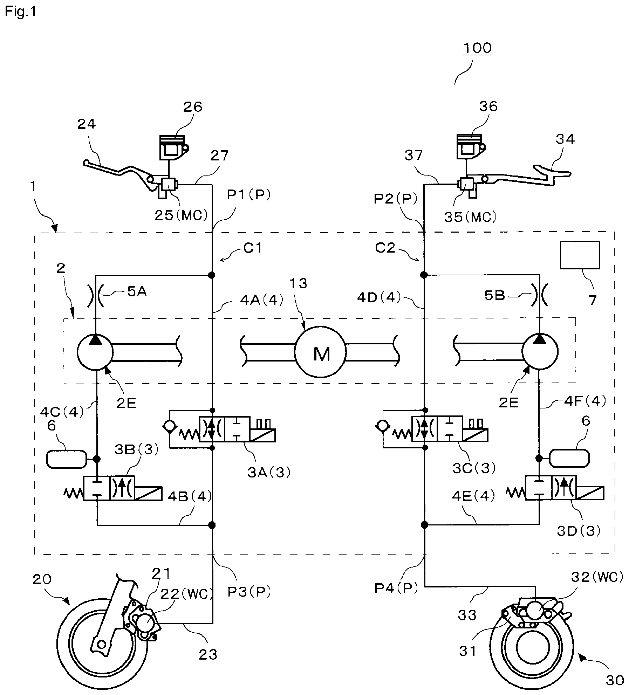

Fig. 1 is a schematic configuration diagram of a brake hydraulic pressure control system that includes a brake hydraulic pressure controller according to the embodiment.

The brake hydraulic pressure control system 100 is installed in a vehicle such as a motorcycle and includes a brake hydraulic pressure controller 1 that causes a wheel of the motorcycle to change a braking force. The motorcycle includes a front wheel 20 and a rear wheel 30 as well as a handlebar lever 24 and a foot pedal 34 that are operated by a user who drives the motorcycle. When this handlebar lever 24 is operated, the braking force on the front wheel 20 is changed. When the foot pedal 34 is operated, the braking force on the rear wheel 30 is changed.

The brake hydraulic pressure control system 100 includes: a front-wheel hydraulic circuit C1 through which a brake fluid used to generate the braking force on the front wheel 20 flows; and a rear-wheel hydraulic circuit C2 through which a brake fluid used to generate the braking force on the rear wheel 30 flows. The front-wheel hydraulic circuit C1 and the rear-wheel hydraulic circuit C2 include an internal channel 4 in the brake hydraulic pressure controller 1, which will be described below. In addition, any of various types of brake oil can be used as the brake fluid.

As a mechanism for generating the braking force on the front wheel 20, and the like, the brake hydraulic pressure control system 100 has the following configuration. More specifically, the brake hydraulic pressure control system 100 includes: a front brake pad 21 that is attached to the front wheel 20; a front wheel cylinder 22 in which a front brake piston (not depicted) for actuating the front brake pad 21 is provided in a freely slidable manner; and a brake fluid pipe 23 that is connected to the front wheel cylinder 22. Note that the front brake pad 21 is provided to sandwich a floating rotor (not depicted) that rotates with the front wheel 20. When being pressed by the front brake piston in the front wheel cylinder 22, the front brake pad 21 abuts against the floating rotor and generates a friction force, and, in this way, the braking force is generated on the front wheel 20 that rotates with the floating rotor.

The brake hydraulic pressure control system 100 includes: a first master cylinder 25 that is attached to the handlebar lever 24; a first reservoir 26 that stores the brake fluid; and a brake fluid pipe 27 that is connected to the first master cylinder 25. Note that a master cylinder piston (not depicted) is provided in a freely slidable manner in the first master cylinder 25. When the handlebar lever 24 is operated, the master cylinder piston in the first master cylinder 25 moves. Because pressure of the brake fluid that is applied to the front brake piston is changed in accordance with a position of the master cylinder piston, a force of the front brake pad 21 to sandwich the floating rotor is changed, and the braking force on the front wheel 20 is also changed.

As a mechanism for generating the braking force on the rear wheel 30, and the like, the brake hydraulic pressure control system 100 has the following configuration. More specifically, the brake hydraulic pressure control system 100 includes: a rear brake pad 31 that is attached to the rear wheel 30; a rear wheel cylinder 32 in which a rear brake piston (not depicted) for moving the rear brake pad 31 is provided in a freely slidable manner; and a brake fluid pipe 33 that is connected to the rear wheel cylinder 32. Note that the rear brake pad 31 is provided to sandwich a floating rotor (not depicted) that rotates with the rear wheel 30. When being pressed by the rear brake piston in the rear wheel cylinder 32, the rear brake pad 31 abuts against the floating rotor and generates a friction force, and, in this way, the braking force is generated on the rear wheel 30 that rotates with the floating rotor.

The brake hydraulic pressure control system 100 includes: a second master cylinder 35 that is attached to the foot pedal 34; a second reservoir 36 that stores the brake fluid; and a brake fluid pipe 37 that is connected to the second master cylinder 35. Note that a master cylinder piston (not depicted) is provided in a freely slidable manner in the second master cylinder 35. When the foot pedal 34 is operated, the master cylinder piston in the second master cylinder 35 moves. Because pressure of the brake fluid that is applied to the rear brake piston is changed in accordance with a position of the master cylinder piston, a force of the rear brake pad 31 to sandwich the floating rotor is changed, and the braking force on the rear wheel 30 is also changed.

### <Configuration of brake hydraulic pressure controller 1>

A description will be made on a configuration of the brake hydraulic pressure controller 1.

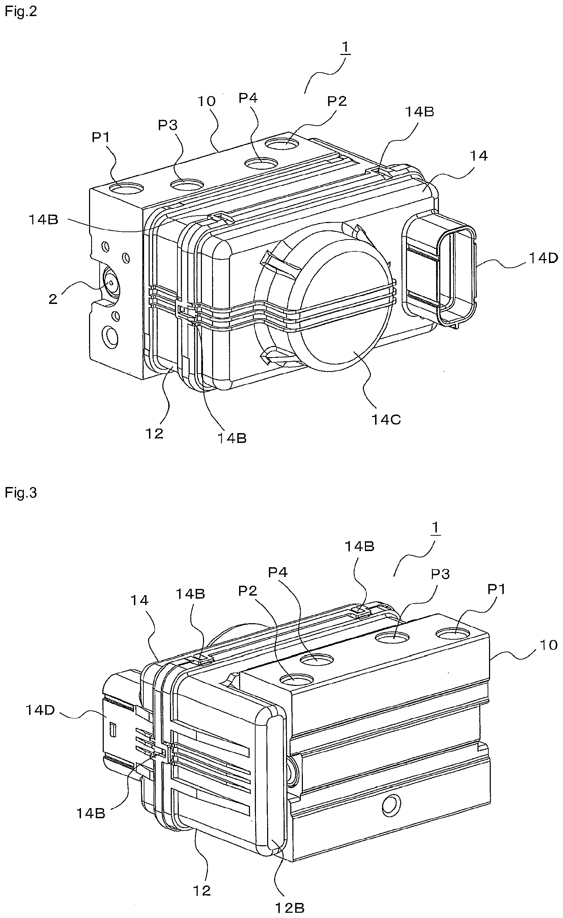

Fig. 2 is a perspective view of the brake hydraulic pressure controller according to the embodiment.

Fig. 3 is a perspective view of the brake hydraulic pressure controller according to the embodiment that is seen at a different angle from Fig. 2.

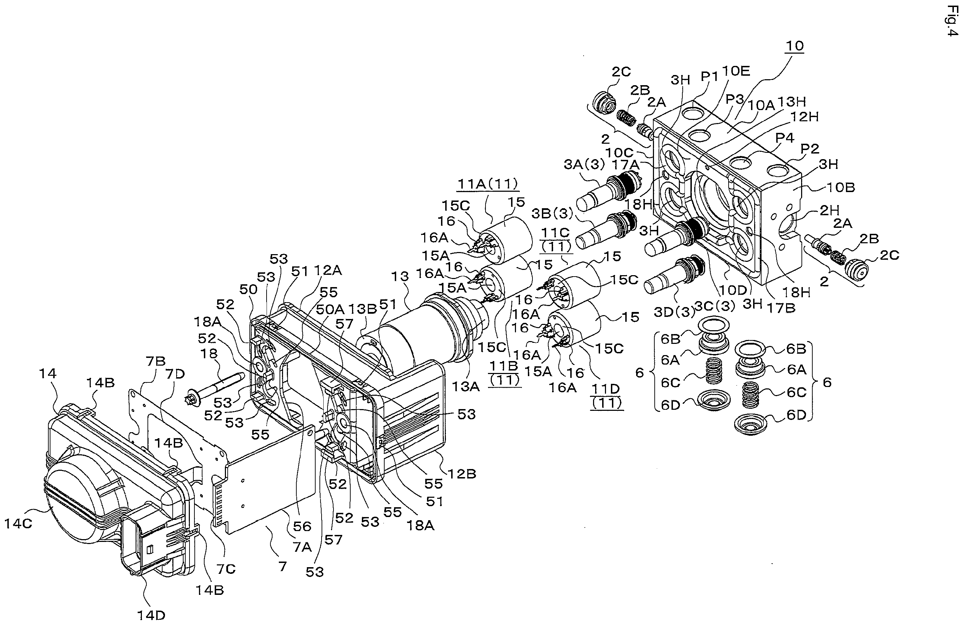

Fig. 4 is an exploded perspective view of the brake hydraulic pressure controller according to the embodiment.

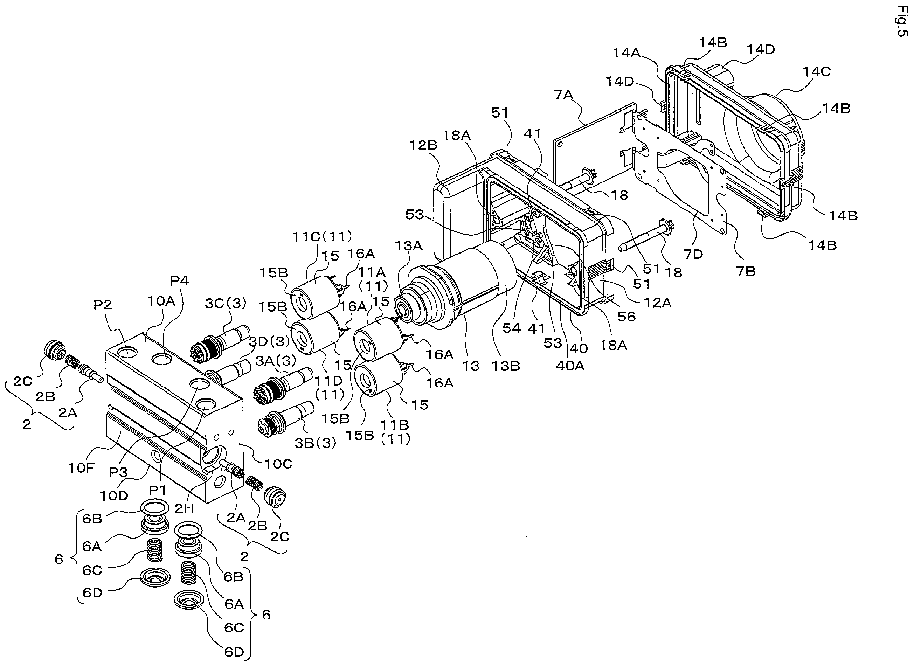

Fig. 5 is an exploded perspective view of the brake hydraulic pressure controller according to the embodiment that is seen at a different angle from Fig. 4.

The brake hydraulic pressure controller 1 is embedded in the vehicle such as a two-wheeled motorized vehicle. As depicted in Figs. 2 to 5, the brake hydraulic pressure controller 1 is constructed of: a base body 10 to which a pump device 2 for applying pressure to the brake fluid and the like is assembled and which is formed with the internal channel 4, through which the brake fluid flows; freely openable/closable hydraulic pressure regulating valves 3 that are provided in the front-wheel hydraulic circuit C1 and the rear-wheel hydraulic circuit C2; drive coils 11 that respectively drive the hydraulic pressure regulating valve 3; a coil casing 12 that accommodates the drive coils 11; a drive mechanism 13 that drives the pump device 2; a control unit 7 that controls opening/closing and the like of the pump device 2 and the hydraulic pressure regulating valves 3; a control unit casing 14 that accommodates the control unit 7; and the like.

As in the perspective views depicted in Figs. 2, 3, an external appearance of the brake hydraulic pressure controller 1 is configured by combining the base body 10, the coil casing 12, and the control unit casing 14.

Next, a description will be made on a configuration of each section of the brake hydraulic pressure controller 1 with reference to Figs. 1 to 5.

### (Base body 10)

The base body 10 is made of metal such as aluminum and is formed of a substantially cuboid block. The internal channel 4, through which the brake fluid flows, is formed in the base body 10.

The internal channel 4 is configured by including: a first internal channel 4A, a second internal channel 4B, and a third internal channel 4C that constitute a portion of the front-wheel hydraulic circuit C1; and a fourth internal channel 4D, a fifth internal channel 4E, and a sixth internal channel 4F that constitute a portion of the rear-wheel hydraulic circuit C2.

In addition, various ports P are opened in a first surface 10A of the base body 10. The various ports P are configured by including: a first port P1 that is connected to drive mechanisms such as the handlebar lever 24; a second port P2 that is connected to the drive mechanisms such as the foot pedal 34; a third port P3 that is connected to the drive mechanisms such as the front brake pad 21; and a fourth port P4 that is connected to the drive mechanisms such as the rear brake pad 31.

The brake fluid pipe 27 is connected to the first port P1 and communicates with the first internal channel 4A. The brake fluid pipe 37 is connected to the second port P2 and communicates with the fourth internal channel 4D. The brake fluid pipe 23 is connected to the third port P3 and communicates with the second internal channel 4B. The brake fluid pipe 33 is connected to the fourth port P4 and communicates with the fifth internal channel 4E.

Of the internal channel 4, the first internal channel 4A is connected to a brake fluid outflow side of the pump device 2, a first pressure boosting valve 3A as one of the hydraulic pressure regulating valves 3, and the first port P1. In addition, the first internal channel 4A is provided with a first flow restrictor 5A for restricting a flow rate of the brake fluid that flows through the internal channel 4.

Of the internal channel 4, the second internal channel 4B is connected to the first pressure boosting valve 3A, a first pressure reducing valve 3B as one of the hydraulic pressure regulating valves 3, and the third port P3.

Of the internal channel 4, the third internal channel 4C is connected to a brake fluid inflow side of the pump device 2 and the first pressure reducing valve 3B. In addition, the third internal channel 4C is provided with an accumulator 6 that maintains the pressure of the brake fluid in the internal channel 4.

Of the internal channel 4, the fourth internal channel 4D is connected to the brake fluid outflow side of the pump device 2, a second pressure boosting valve 3C as one of the hydraulic pressure regulating valves 3, and the second port P2. In addition, the fourth internal channel 4D is provided with a second flow restrictor 5B for restricting the flow rate of the brake fluid that flows through the internal channel 4.

Of the internal channel 4, the fifth internal channel 4E is connected to the second pressure boosting valve 3C, a second pressure reducing valve 3D as one of the hydraulic pressure regulating valves 3, and the fourth port P4.

Of the internal channel 4, the sixth internal channel 4F is connected to the brake fluid inflow side of the pump device 2 and the second pressure reducing valve 3D. In addition, the sixth internal channel 4F is provided with the accumulator 6 that maintains the pressure of the brake fluid in the internal channel 4.

A pump opening 2H for accommodating the pump device 2, which will be described below, is formed in each of a second surface 10B and a third surface 10C as two opposing surfaces of the base body 10.

In addition, accumulator openings 6H for accommodating the paired accumulators 6, which will be described below, are formed in a fourth surface 10D of the base body 10.

Furthermore, a drive mechanism opening 13H for accommodating the drive mechanism 13 of the pump device 2, which will be described below, is formed substantially at a center of a fifth surface 10E of the base body 10, and, for example, four regulating valve openings 3H for accommodating the hydraulic pressure regulating valves 3 are formed around this drive mechanism opening 13H. In addition, paired positioning holes 12H for positioning with the coil casing 12, which will be described below, are opened. Paired screw openings 18H, to which screws 18, which will be described below, are inserted and fixed, are opened.

Note that a surface of the base body 10 that opposes the fifth surface 10E is set as a sixth surface 10F.

### (Pump device 2)

The pump device 2 feeds the brake fluid in the internal channel 4 of the base body 10 to the first master cylinder 25 side and the second master cylinder 35 side. The pump device 2 includes: the drive mechanism 13 that can be constructed of a DC motor and the like, for example; and two pump elements 2E, to each of which drive power is applied by the drive mechanism 13. A motor section 13A that includes a stator, a rotor, and the like is disposed on one end side of the drive mechanism 13. A rotational frequency of the motor section 13A is controlled by the control unit 7. In addition, an eccentric mechanism 13B that is attached to a rotary shaft is disposed on the other end side of the drive mechanism 13. The eccentric mechanism 13B is accommodated in the drive mechanism opening 13H that is formed substantially at the center of the fifth surface 10E of the base body 10.

The pump elements 2E are connected to the eccentric mechanism 13B of the drive mechanism 13 and are accommodated in the pump openings 2H that are respectively formed in the opposing second surface 10B and third surface 10C of the base body 10. Each of the pump elements 2E is constructed of: a piston mechanism section 2A that reciprocates in the pump opening 2H; an elastic body 2B that is attached to the piston mechanism section 2A; and a pump cover 2C that closes the pump opening 2H.

One of the pump elements 2E is used to feed the brake fluid in the front-wheel hydraulic circuit C1 and feeds the brake fluid in the third internal channel 4C to the first internal channel 4A side. The other of the pump elements 2E is used to feed the brake fluid in the rear-wheel hydraulic circuit C2 and feeds the brake fluid in the sixth internal channel 4F to the fourth internal channel 4D side.

### (Hydraulic pressure regulating valves 3 and drive coils 11)

Each of the hydraulic pressure regulating valves 3 is a valve that is provided to open/close the internal channel 4 of the base body 10. Opening/closing of the hydraulic pressure regulating valves 3 are controlled by the control unit 7. The hydraulic pressure regulating valves 3 include the first pressure boosting valve 3A, the first pressure reducing valve 3B, the second pressure boosting valve 3C, and the second pressure reducing valve 3D. Each of the hydraulic pressure regulating valves 3 can be constructed of an electromagnetic valve that has the drive coil 11 with a solenoid coil, for example, and an opened/closed state thereof is switched when energization thereof is controlled by the control unit 7.

Each of the drive coils 11 accommodates the solenoid coil in a cylindrical coil housing 15. One end side of the hydraulic pressure regulating valve 3 is accommodated in a columnar opening section 15A that penetrates the coil housing 15. When the energization of the drive coil 11 is turned on/off in this accommodated state, a movable element that is accommodated in a casing of the hydraulic pressure regulating valve 3 moves, and a valve body that is coupled to the movable element is controlled between two positions of a closed position and an opened position.

The coil housing 15 has: one end section 15B that forms one end side of a contour; and the other end section 15C that forms the other end side opposing the one end section 15B. The one end section 15B has a circular plane shape and is formed with a circular opening of the columnar opening section 15A at a center thereof. Similar to the one end section 15B, the other end section 15C has the circular plane shape, is formed with the circular opening of the columnar opening section 15A at a center thereof, and is vertically provided with paired terminal boards 16 on a surface thereof. A terminal 16A is attached to a tip of each of the terminal boards 16, and a power supply to be supplied to the drive coil 11 is connected thereto.

The one end section 15B of the coil housing 15 is adhered to the fifth surface 10E (corresponding to the adhesion surface section of the invention) of the base body 10 via a first adhesive member 17A. The first adhesive member 17A is a seal material that has waterproof performance, and a silicone rubber based adhesive or a sealing tape can be adopted therefor, for example.

One end side of the first pressure boosting valve 3A is accommodated in the columnar opening section 15A of a first drive coil 11A. Meanwhile, the other end side of the first pressure boosting valve 3A is housed in the regulating valve opening 3H that is formed in the fifth surface 10E of the base body 10, and is disposed at a position that partitions the first internal channel 4A and the second internal channel 4B in the base body 10.

The first pressure boosting valve 3A is a valve that is opened to boost the pressure of the brake fluid in the front wheel cylinder 22 during actuation of the ABS. That is, when the first pressure boosting valve 3A is opened, the brake fluid on the first internal channel 4A side is pressure-fed to the second internal channel 4B side by actions of the first master cylinder 25 and the one pump element 2E that corresponds to the first master cylinder 25. As a result, the pressure of the front wheel cylinder 22 is boosted, opening of the front brake pad 21 is reduced, and the braking force on the front wheel 20 is increased.

One end side of the first pressure reducing valve 3B is accommodated in the columnar opening section 15A of a second drive coil 11B. Meanwhile, the other end side of the first pressure reducing valve 3B is housed in the regulating valve opening 3H that is formed in the fifth surface 10E of the base body 10, and is disposed at a position that partitions the third internal channel 4C and the second internal channel 4B in the base body 10.

The first pressure reducing valve 3B is a valve that is opened to reduce the pressure of the brake fluid in the front wheel cylinder 22 during the actuation of the ABS. That is, when the first pressure reducing valve 3B is opened, the brake fluid in the brake fluid pipe 23 and the second internal channel 4B is drawn to the third internal channel 4C side by the action of the one pump element 2E. As a result, the pressure of the front wheel cylinder 22 is reduced, the opening of the front brake pad 21 is increased, and the braking force on the front wheel 20 is reduced.

During the actuation of the ABS, the first pressure boosting valve 3A is closed when the first pressure reducing valve 3B is opened, and the first pressure reducing valve 3B is closed when the first pressure boosting valve 3A is opened.

One end side of the second pressure boosting valve 3C is accommodated in the columnar opening section 15A of a third drive coil 11C. Meanwhile, the other end side of the second pressure boosting valve 3C is housed in the regulating valve opening 3H that is formed in the fifth surface 10E of the base body 10, and is disposed at a position that partitions the fourth internal channel 4D and the fifth internal channel 4E in the base body 10.

The second pressure boosting valve 3C is a valve that is opened to boost the pressure of the brake fluid in the rear wheel cylinder 32 during the actuation of the ABS. That is, when the second pressure boosting valve 3C is opened, the brake fluid on the fourth internal channel 4D side is pressure-fed to the fifth internal channel 4E side by actions of the second master cylinder 35 and the other pump element 2E that corresponds to the second master cylinder 35. As a result, the pressure of the rear wheel cylinder 32 is boosted, opening of the rear brake pad 31 is reduced, and the braking force on the rear wheel 30 is increased.

One end side of the second pressure reducing valve 3D is accommodated in the columnar opening section 15A of a fourth drive coil 11D. Meanwhile, the other end side of the second pressure reducing valve 3D is housed in the regulating valve opening 3H that is formed in the fifth surface 10E of the base body 10, and is disposed at a position that partitions the sixth internal channel 4F and the fifth internal channel 4E in the base body 10.

The second pressure reducing valve 3D is a valve that is opened to reduce the pressure of the brake fluid in the rear wheel cylinder 32 during the actuation of the ABS. That is, when the second pressure reducing valve 3D is opened, the brake fluid in the brake fluid pipe 33 and the fifth internal channel 4E is drawn to the sixth internal channel 4F side by the action of the other pump element 2E. As a result, the pressure of the rear wheel cylinder 32 is reduced, the opening of the rear brake pad 31 is increased, and the braking force on the rear wheel 30 is reduced.

During the actuation of the ABS, the second pressure boosting valve 3C is closed when the second pressure reducing valve 3D is opened, and the second pressure reducing valve 3D is closed when the second pressure boosting valve 3C is opened.

### (First flow restrictor 5A and second flow restrictor 5B)

The first flow restrictor 5A is provided in a portion of the first internal channel 4A that is on the brake fluid outflow side of the one pump element 2E. The second flow restrictor 5B is provided in a portion of the fourth internal channel 4D that is on the brake fluid outflow side of the other pump element 2E. Due to an action of the first flow restrictor 5A, the brake fluid flows out from the one pump element 2E side to the first master cylinder 25 side, so as to be able to suppress a rapid boost in the pressure of the brake fluid in the first master cylinder 25. The second flow restrictor 5B has an action that corresponds to the first flow restrictor 5A and thus can suppress a rapid boost in the pressure of the brake fluid in the second master cylinder 35.

### (Accumulators 6)

The accumulators 6 are respectively disposed in the accumulator openings 6H that are opened in the fourth surface 10D of the base body 10. The accumulators 6 are each constructed of: a piston member 6A that slides in the accumulator opening 6H; an O-ring 6B that is disposed around the piston member 6A; an elastic member 6C that urges the piston member 6A to the third internal channel 4C side or the sixth internal channel 4F side; and a lid member 6D that closes the accumulator opening 6H.

The accumulators 6 are respectively provided in the third internal channel 4C and the sixth internal channel 4F and each adjust the pressure of the brake fluid by the piston member 6A that is urged by the elastic member 6C, so as to hold actuation hydraulic pressure of the front-wheel hydraulic circuit C1 and the rear-wheel hydraulic circuit C2 at constant pressure.

### (Control unit 7)

The control unit 7 is constructed of: a control board 7A that includes an input section for receiving signals from various sensors and the like, a processor section for performing calculations, a memory section for storing a program, and the like; and a flexible printed wiring board 7B to which the terminals 16A of the drive coils 11 are connected. A terminal section 7C that receives an external signal is provided in one end section of the control board 7A. In addition, an opening section 7D through which the drive mechanism 13 is inserted is opened in a central section of the flexible printed wiring board 7B. The control board 7A and the flexible printed wiring board 7B are flexibly joined.

The control unit 7 receives the signals from the various sensors and the like and controls a rotational frequency of the drive mechanism 13 of the pump device 2, opening/closing of the hydraulic pressure regulating valves 3, and the like.

During the actuation of the ABS, the control unit 7 adjusts the pressure of the brake fluid in the front wheel cylinder 22 and the pressure of the brake fluid in the rear wheel cylinder 32 by controlling opening/closing of the hydraulic pressure regulating valves 3, so as to avoid locking of the front wheel 20 and the rear wheel 30.

### (Coil casing 12)

The coil casing 12 is a hollow housing that is molded by a resin, for example.

The coil casing 12 is a substantially cuboid housing and accommodates the drive coils 11, the hydraulic pressure regulating valves 3, and the like therein. The coil casing 12 is constructed of: a frame member 12A in a rectangular tube shape; and a control board accommodating section 12B that is formed in one surface of the frame member 12A and accommodates the control board 7A.

A rectangular first surface section 40 which constitutes a contour of the coil casing 12 and a center of which is opened is formed on one end side of the frame member 12A.

The first surface section 40 is adhered to the fifth surface 10E (corresponding to the adhesion surface section of the invention) of the base body 10 via a second adhesive member 17B. The second adhesive member 17B is the seal material that has the waterproof performance, and the silicone rubber based adhesive or the sealing tape can be adopted therefor, for example. A recessed section 40A that accommodates the second adhesive member 17B is formed in the first surface section 40.

A screw fixation hole 18A to which a screw 18, which will be described below, is inserted and fixed is opened at two positions on the first surface section 40 side in the frame member 12A. In addition, paired positioning projections 41 that are respectively fitted to the positioning holes 12H of the base body 10 to position the coil casing 12 and the base body 10 are provided in a projected manner.

A rectangular second surface section 50 which constitutes the contour of the coil casing 12 and a center of which is opened is formed on the other end side of the frame member 12A. The second surface section 50 includes an outer circumferential section 50A that abuts against an opening edge section 14A of the control unit casing 14 at a time when the control unit casing 14 is attached to the coil casing 12. Engagement sections 51, with which engagement claws 14B of the control unit casing 14 are respectively engaged, are formed in an outer circumferential surface of the second surface section 50.

A support projection 52 that supports the flexible printed wiring board 7B is provided in a projected manner at six positions on an outer surface side of the second surface section 50. In addition, on the outer surface side of the second surface section 50, paired holding claws 57 that hold the flexible printed wiring board 7B at a time when the flexible printed wiring board 7B is placed on the support projections 52 are vertically provided.

The control board accommodating section 12B is formed as a bulged section in a bag shape, in which a portion thereof on the second surface section 50 side of the coil casing 12 is opened and a portion thereof on the first surface section 40 side is closed, and the control board 7A is inserted and accommodated therein.

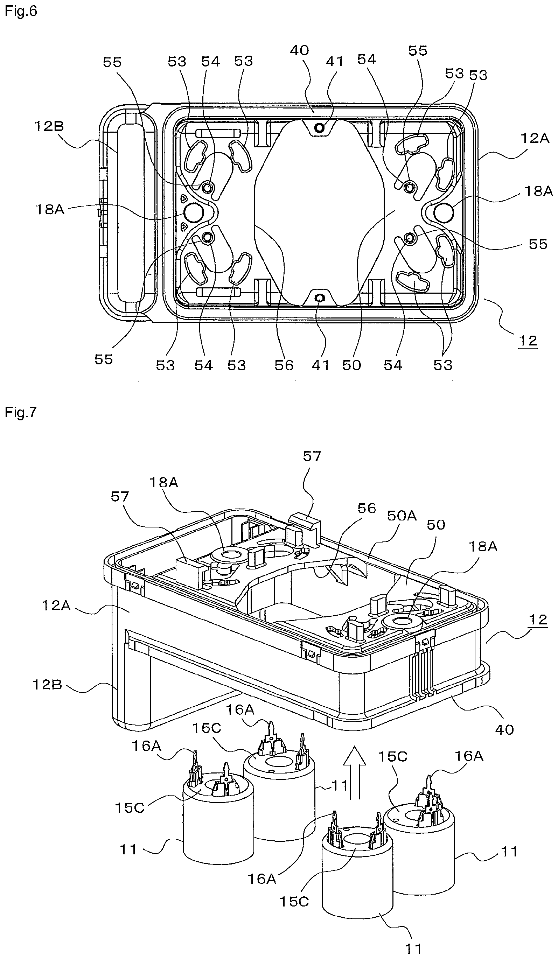

Here, a configuration of the second surface section 50 of the coil casing 12 will be described in detail by using Fig. 6.

Fig. 6 is a plan view in which inside of the coil casing of the brake hydraulic pressure controller according to the embodiment is seen from the first surface section side.

As depicted in Fig. 6, the screw fixation hole 18A, to which the screw 18 is inserted and fixed, is opened at the two positions in the second surface section 50. In addition, paired positioning openings 53, to which the paired terminal boards 16 of the drive coil 11 are respectively inserted, and which confirm an attachment position of the drive coil 11 with respect to the coil casing 12, are opened in a total of four sets (at eight positions) in the second surface section 50, the number of the positioning openings 53 corresponding to the number of the drive coils 11.

Furthermore, the second surface section 50 is formed with holding projections 54 that are provided in a projected manner on the first surface section 40 side of the coil casing 12 and that respectively abut against the other end sections 15C of the drive coils 11. The holding projections 54 are each formed on a tongue piece section 55 that is formed by opening a circumference of the holding projection 54 in the second surface section 50. Moreover, a drive mechanism hole 56 that is penetrated by the drive mechanism 13 is opened substantially at a center of the second surface section 50.

### (Control unit casing 14)

The control unit casing 14 is attached to the second surface section 50 of the coil casing 12 and functions as a lid member that accommodates the control unit 7 therein.

In a circumference of the opening edge section 14A of the control unit casing 14, six units of the engagement claws 14B are disposed, for example, and engaged with the corresponding engagement sections 51 of the coil casing 12.

In the control unit casing 14, a substantially cylindrical bulged section 14C that accommodates the drive mechanism 13 is formed to be directed to outside. In addition, a terminal hole 14D that is used to connect wire to the terminal section 7C of the control board 7A is opened adjacent to the bulged section 14C.

### <Method for manufacturing brake hydraulic pressure controller 1>

Next, a description will be made on a method for manufacturing the brake hydraulic pressure controller 1 by using Fig. 7 to Fig. 12.

Fig. 7 is a perspective view that explains a manufacturing step 1 of the brake hydraulic pressure controller according to the embodiment.

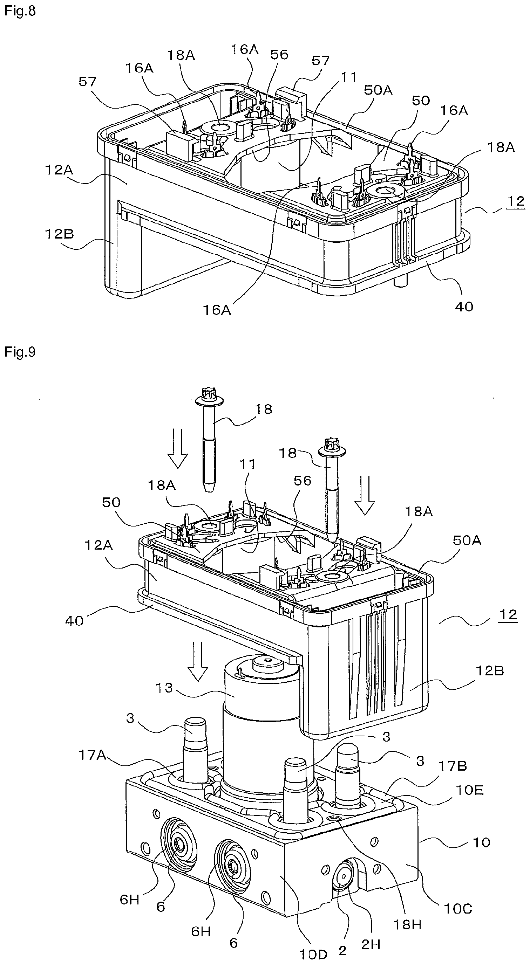

Fig. 8 is a perspective view that explains a manufacturing step 2 of the brake hydraulic pressure controller according to the embodiment.

Fig. 9 is a perspective view that explains a manufacturing step 3 of the brake hydraulic pressure controller according to the embodiment.

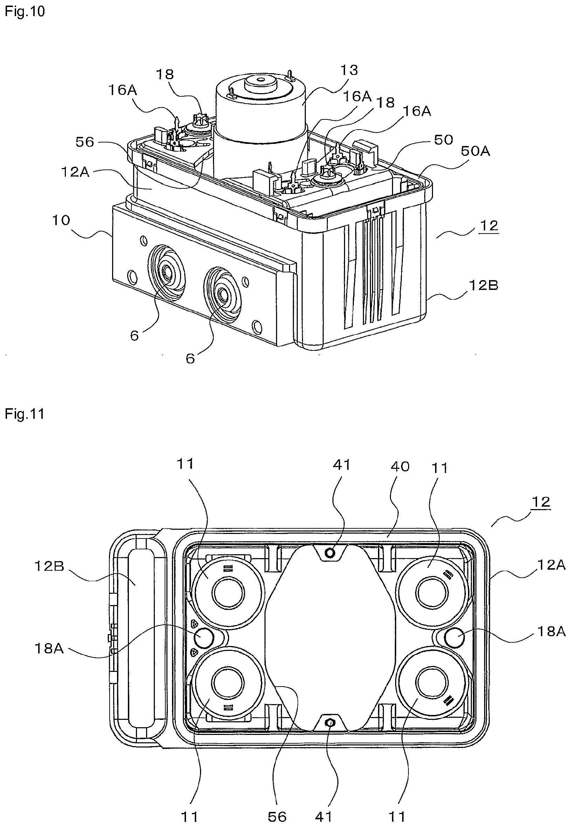

Fig. 10 is a perspective view that explains a manufacturing step 4 of the brake hydraulic pressure controller according to the embodiment.

Fig. 11 is a plan view on the first surface section side of the coil casing in the manufacturing step 2 of the brake hydraulic pressure controller according to the embodiment.

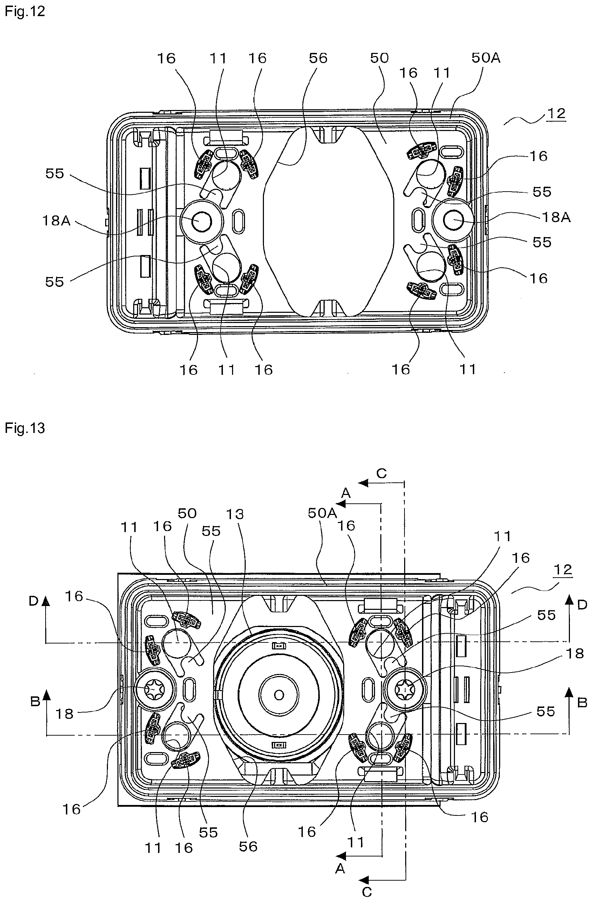

Fig. 12 is a plan view on the second surface section side of the coil casing in the manufacturing step 2 of the brake hydraulic pressure controller according to the embodiment.

First, as depicted in Fig. 7 as the manufacturing step 1, the drive coils 11 are inserted from the first surface section 40 side of the coil casing 12 and accommodated in the frame member 12A. At this time, each of the drive coils 11 is inserted in the frame member 12A from the other end section 15C side, on which the terminals 16A are disposed.

Next, as depicted in Fig. 8 as the manufacturing step 2, the paired terminal boards 16 of the drive coil 11 are respectively inserted in the positioning openings 53, which are opened in the second surface section 50 of the coil casing 12, so as to confirm the attachment position of the drive coil 11 with respect to the coil casing 12. At this time, when seen from the first surface section 40 side of the coil casing 12 as depicted in Fig. 11, the four drive coils 11 are disposed at and accommodated in four corners of the coil casing 12. In addition, when seen from the second surface section 50 side of the coil casing 12 as depicted in Fig. 12, the paired terminal boards 16 are held in a state of being respectively inserted in the positioning openings 53 that are opened in the second surface section 50 of the coil casing 12.

Next, as depicted in Fig. 9 as the manufacturing step 3, the first adhesive member 17A and the second adhesive member 17B are disposed on the fifth surface 10E of the base body 10, and the coil casing 12 that has accommodated the drive coils 11 in the manufacturing step 2 is adhered to the base body 10. At this time, the hydraulic pressure regulating valves 3 and the drive mechanism 13 are incorporated in the base body 10, and the coil casing 12 and the base body 10 are brought into close contact with each other such that one end sections of the hydraulic pressure regulating valves 3 are respectively inserted in the columnar opening sections 15A of the coil housings 15.

The first adhesive member 17A is disposed, for example, in a circular shape around each of the regulating valve openings 3H so as to be brought into close contact with the one end sections 15B of the drive coils 11. Meanwhile, the second adhesive member 17B is disposed, for example, in a rectangular shape around the fifth surface 10E of the base body 10 so as to be brought into close contact with the first surface section 40 of the coil casing 12.

The first adhesive member 17A and the second adhesive member 17B are preferably provided in a continuous manner, and, in such a case, man-hours of the manufacturing process can be reduced. In particular, all of the first adhesive member 17A and the second adhesive member 17B are preferably continued.

In addition, the first adhesive member 17A and the second adhesive member 17B may be configured as adhesive members of the same material or may be configured as adhesive members of different materials; however, the man-hours of the manufacturing process can be reduced in the case where they are configured as the adhesive members of the same material.

Note that, in the manufacturing step 3, it is possible to assemble the base body 10 and the coil casing 12 while the drive coils 11 are held in the coil casing 12 by using attracting means such as an electromagnet.

Next, as depicted in Fig. 10 as the manufacturing step 4, the coil casing 12 and the base body 10 are adhered and integrated by the first adhesive member 17A and the second adhesive member 17B. At this time, a joined state of the base body 10 and the coil casing 12 is kept by the screws 18 until the first adhesive member 17A and the second adhesive member 17B are hardened. The screws 18 are inserted through the screw fixation holes 18A of the coil casing 12 and are fixed to the screw openings 18H of the base body 10.

Then, the holding projections 54 that are provided in the second surface section 50 of the coil casing 12 abut against the other end sections 15C of the coil housings 15 and hold the drive coils 11 until the first adhesive member 17A and the second adhesive member 17B are hardened. Thus, the drive coils 11 are adhered to accurate positions with respect to the base body 10. Note that, because being formed on the tongue piece sections 55, the holding projections 54 can reliably hold the drive coils 11 when the tongue piece sections 55 are elastically deformed.

After the first adhesive member 17A and the second adhesive member 17B are hardened, the screws 18 can be removed; however, they may remain attached for simplification of the manufacturing process.

Here, a description will be made on a cross-sectional configuration in a state where the coil casing 12 and the base body 10 are adhered in the manufacturing step 4 by using Fig. 13 to Fig. 17.

Fig. 13 is a top view in the manufacturing step 4 (Fig. 10) of the brake hydraulic pressure controller according to the embodiment.

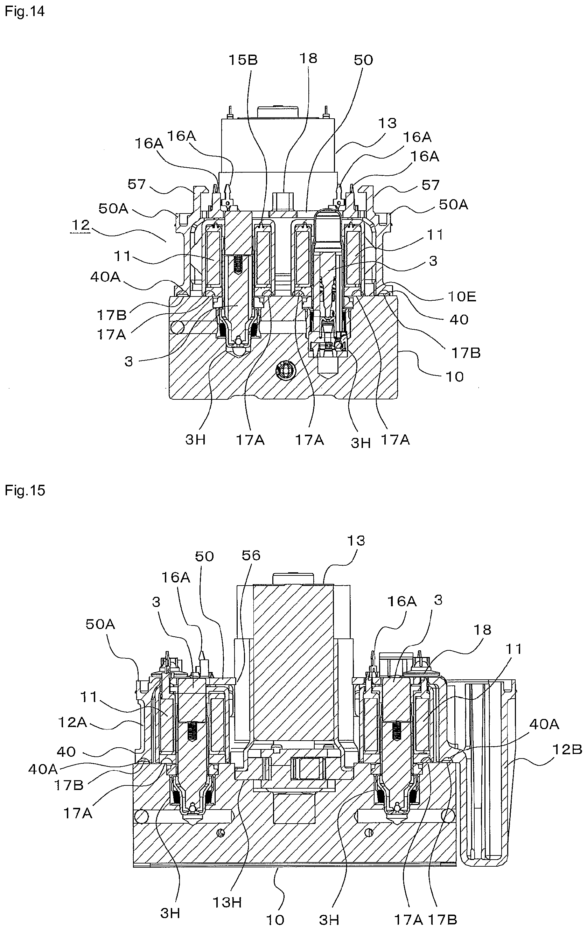

Fig. 14 is an A-A cross-sectional view in Fig. 13 of the brake hydraulic pressure controller according to the embodiment.

Fig. 15 is a B-B cross-sectional view in Fig. 13 of the brake hydraulic pressure controller according to the embodiment.

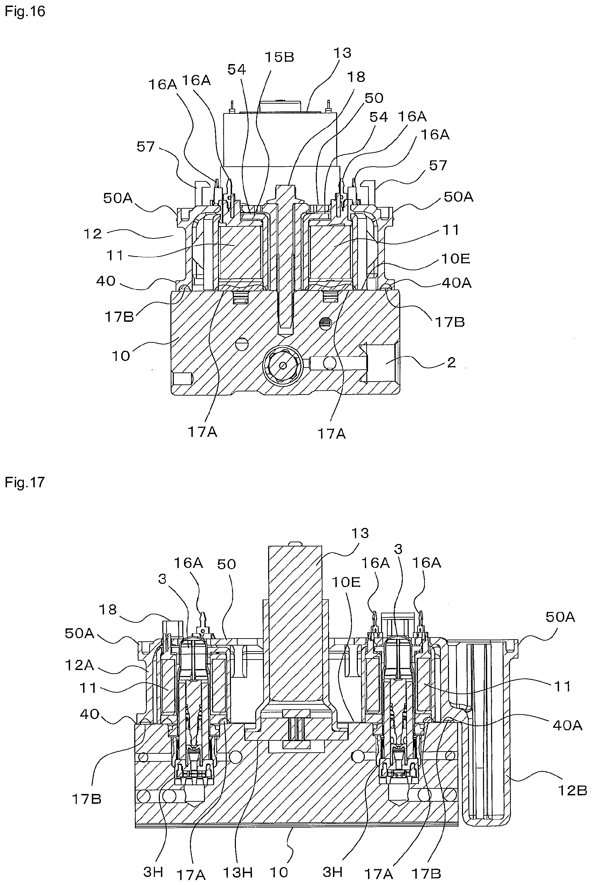

Fig. 16 is a C-C cross-sectional view in Fig. 13 of the brake hydraulic pressure controller according to the embodiment.

Fig. 17 is a D-D cross-sectional view in Fig. 13 of the brake hydraulic pressure controller according to the embodiment.

In the cross-sectional configuration of the brake hydraulic pressure controller 1 according to the embodiment, as depicted in Fig. 14 to Fig. 17, the hydraulic pressure regulating valves 3 are each accommodated in the coil casing 12 in a state of being stored in the drive coils 11. A lower end section of the hydraulic pressure regulating valve 3 is housed in the regulating valve opening 3H that is opened to the fifth surface 10E of the base body 10. In addition, the terminal boards 16 and the terminals 16A that are provided in each of the coil housings 15 are inserted through the positioning opening 53 that is opened to the second surface section 50 of the coil casing 12, and positions of the drive coils 11 and the terminals 16A are fixed.

The drive mechanism 13 penetrates the drive mechanism hole 56 of the coil casing 12, and a lower end thereof is housed in the drive mechanism opening 13H that is opened to the fifth surface 10E of the base body 10.

In the manufacturing step 4 according to the embodiment, the coil casing 12 is held on the fifth surface 10E of the base body 10 by the screws 18 as depicted in Fig. 16, and, in this way, the holding projections 54 that are provided in the second surface section 50 of the coil casing 12 abut against the other end sections 15C of the coil housings 15. Then, the drive coils 11 are held until the first adhesive member 17A on the one end sections 15B of the coil housings 15 is hardened. Thus, the drive coils 11 are adhered to the accurate positions with respect to the base body 10.

In addition, as depicted in Fig. 14 to Fig. 17, because being accommodated in the recessed section 40A that is formed in the first surface section 40, the second adhesive member 17B between the first surface section 40 of the coil casing 12 and the fifth surface 10E of the base body 10 does not spread on the fifth surface 10E and thus can exert a reliable adhering function.

After the coil casing 12 and the base body 10 are adhered in the manufacturing step 4, the control board 7A of the control unit 7 is accommodated in the control board accommodating section 12B of the coil casing 12. Then, the flexible printed wiring board 7B is placed on the holding projections 54 that are formed on the second surface section 50 of the coil casing 12 and is fixed by the holding claws 57. In addition, the terminal 16A of each of the drive coils 11 is soldered to each contact point on the flexible printed wiring board 7B. Finally, the engagement claws 14B of the control unit casing 14 are engaged with the engagement sections 51 of the coil casing 12, and the brake hydraulic pressure controller 1 is completed as depicted in Figs. 2, 3.

### <Effects>

According to the brake hydraulic pressure controller 1 according to the embodiment, the one end sections 15B of the drive coils 11 are adhered to the base body 10 via the first adhesive member 17A. Thus, a fixation structure of the base body 10 and the drive coil 11 is simplified, and suppression of manufacturing cost and downsizing of the brake hydraulic pressure controller 1 can be realized.

In addition, because the base body 10 and the coil casing 12 are adhered via the second adhesive member 17B with a sealing property, the fixation structure of the base body 10 and the coil casing 12 is simplified, and an adhesion structure with a waterproof property can be realized.

Because the first adhesive members 17A and the second adhesive member 17B are continuously formed, the process of applying the adhesive members can be simplified.

Furthermore, because the first adhesive member 17A and the second adhesive member 17B are the adhesive members of the same material, the process of applying the adhesive members can be simplified in a similar manner.

Because the holding projections 54 that are provided in the projected manners on the first surface section 40 side and abut against the other end sections 15C of the drive coils 11 are formed on the second surface section 50 of the coil casing 12, the drive coils 11 can be held until the first adhesive member 17A is hardened, and the drive coils 11 can be adhered to the accurate positions with respect to the base body 10.

Furthermore, because being formed on the tongue piece sections 55 that are formed by opening the circumferences of the holding projections 54 in the second surface section 50, the holding projections 54 can reliably hold the drive coils 11 due to elastic deformation of the tongue piece sections 55.

The terminal boards 16 that support the terminals 16A are vertically provided on the other end sections 15C of the drive coils 11, and the positioning openings 53, through which the terminal boards 16 are inserted, are formed in the second surface section 50 of the coil casing 12. Accordingly, the attachment positions of the drive coils 11 can be confirmed with respect to the coil casing 12, and the terminals 16A can be connected to specified positions on the flexible printed wiring board 7B.

Because the support projections 52 that support the flexible printed wiring board 7B are formed on the outer surface side of the second surface section 50, the flexible printed wiring board 7B can reliably be positioned.

The joined state of the base body 10 and the coil casing 12 is kept by the screws 18, and each of the screws 18 is disposed between the drive coils 11. Accordingly, the joined state of the base body 10 and the coil casing 12 can be kept until the first adhesive member 17A and the second adhesive member 17B are hardened, and thus reliable adhesion can be realized.

The brake hydraulic pressure controller 1 is manufactured by the method for manufacturing that includes: the step of accommodating and positioning the drive coils 11 of the hydraulic pressure regulating valves 3 in the coil casing 12; the step of applying the adhesive members 17A, 17B to the base body 10 that is formed with the channel for a hydraulic fluid; the step of adhering the base body 10 and the drive coils 11 via the adhesive members 17A, 17B; and the step of connecting the base body 10 and the coil casing 12 by the screws 18 and keeping the joined state thereof. Accordingly, the fixation structure of the base body 10 and the drive coils 11 is simplified, and the suppression of the manufacturing cost and downsizing of the brake hydraulic pressure controller 1 can be realized.

### [Reference Signs List]

- 1: Brake hydraulic pressure controller
- 2: Pump device
- 2A: Piston mechanism section
- 2B: Elastic body
- 2C: Pump cover
- 2E: Pump element
- 2H: Pump opening
- 3: Hydraulic pressure regulating valve
- 3A: First pressure boosting valve
- 3B: First pressure reducing valve
- 3C: Second pressure boosting valve
- 3D: Second pressure reducing valve
- 3H: Regulating valve opening
- 4: Internal channel
- 4A: First internal channel
- 4B: Second internal channel
- 4C: Third internal channel
- 4D: Fourth internal channel
- 4E: Fifth internal channel
- 4F: Sixth internal channel
- 5A: First flow restrictor
- 5B: Second flow restrictor
- 6: Accumulator
- 6A: Piston member
- 6B: O-ring
- 6C: Elastic member
- 6D: Lid member
- 6H: Accumulator opening
- 7: Control unit
- 7A: Control board
- 7B: Flexible printed wiring board
- 7C: Terminal section
- 7D: Opening section
- 10: Base body
- 10A: First surface
- 10B: Second surface
- 10C: Third surface
- 10D: Fourth surface
- 10E: Fifth surface
- 10F: Sixth surface
- 10H: Positioning hole
- 11: Drive coil
- 11A: First drive coil
- 11B: Second drive coil
- 11C: Third drive coil
- 11D: Fourth drive coil
- 12: Coil casing
- 12A: Frame member
- 12B: Control board accommodating section
- 12H: Positioning hole
- 13: Drive mechanism
- 13A: Motor section
- 13B: Eccentric mechanism
- 13H: Drive mechanism opening
- 14: Control unit casing
- 14A: Opening edge section
- 14B: Engagement claw
- 14C: Bulged section
- 14D: Terminal hole
- 15: Coil housing
- 15A: Columnar opening section
- 15B: One end section
- 15C: Other end section
- 16: Terminal board
- 16A: Terminal
- 17A: First adhesive member
- 17B: Second adhesive member
- 18: Screw
- 18A: Screw fixation hole
- 18H: Screw opening
- 20: Front wheel
- 21: Front brake pad
- 22: Front wheel cylinder
- 23: Brake fluid pipe
- 24: Handlebar lever
- 25: First master cylinder
- 26: First reservoir
- 27: Brake fluid pipe
- 30: Rear wheel
- 31: Rear brake pad
- 32: Rear wheel cylinder
- 33: Brake fluid pipe
- 34: Foot pedal
- 35: Second master cylinder
- 36: Second reservoir
- 37: Brake fluid pipe
- 40: First surface section
- 40A: Recessed section
- 41: Positioning projection
- 50: Second surface section
- 50A: Outer circumferential section
- 51: Engagement section
- 52: Support projection
- 53: Positioning opening
- 54: Holding projection
- 55: Tongue piece section
- 56: Drive mechanism hole
- 57: Holding claw
- 100: Brake hydraulic pressure control system
- C1: Front-wheel hydraulic circuit
- C2: Rear-wheel hydraulic circuit
- P: Port
- P1: First port
- P2: Second port
- P3: Third port
- P4: Fourth port

## Claims

1. A brake hydraulic pressure controller comprising:
a base body formed with a channel of a hydraulic fluid;
plural hydraulic pressure regulating valves provided in the channel; and
plural drive coils respectively provided in the plural hydraulic pressure regulating valves and driving the hydraulic pressure regulating valves, wherein
one end section that constitutes one end side of each of the drive coils is adhered to an adhesion surface section that constitutes a contour of the base body via a first adhesive member.

2. The brake hydraulic pressure controller according to claim 1 comprising:
a coil casing for accommodating the plural drive coils, wherein
a first surface section that constitutes a contour of the coil casing is adhered to the adhesive surface section of the base body via a second adhesive member.

3. The brake hydraulic pressure controller according to claim 2, wherein the first adhesive member and the second adhesive member are continuously formed.

4. The brake hydraulic pressure controller according to claim 2 or 3, wherein the first adhesive member and the second adhesive member are adhesive members of a same material.

5. The brake hydraulic pressure controller according to any one of claims 2 to 4, wherein
the coil casing has a second surface section that is formed to oppose the first surface section,
the drive coil has the other end section that constitutes the other end side of the drive coil, and
the second surface section of the coil casing is formed with a holding projection that is provided in a projected manner on the first surface section side and abuts against the other end sections of the drive coil.

6. The brake hydraulic pressure controller according to claim 5, wherein the holding projection is formed on a tongue piece section that is formed by opening a circumference of the holding projection in the second surface section.

7. The brake hydraulic pressure controller according to claim 5 or 6, wherein
a terminal board for supporting a terminal is vertically provided in the other end section of the drive coil, and
the second surface section of the coil casing is formed with a positioning opening through which the terminal board is inserted.

8. The brake hydraulic pressure controller according to any one of claims 5 to 7 comprising:
a control unit for controlling opening/closing operations of the hydraulic pressure regulating valve, wherein
a support projection for supporting the control unit is formed on an outer surface side of the second surface section.

9. The brake hydraulic pressure controller according to any one of claims 2 to 8, wherein a joined state of the base body and the coil casing is kept by a screw.

10. The brake hydraulic pressure controller according to claim 9, wherein the screw is disposed between the plural drive coils.

11. A method for manufacturing a brake hydraulic pressure controller comprising:
a step of accommodating and positioning a drive coil of a hydraulic pressure regulating valve in a coil casing;
a step of applying an adhesive member to a base body that is formed with a channel of a hydraulic fluid;
a step of adhering the base body and the drive coil via the adhesive member; and
a step of connecting the base body and the coil casing via a screw and keeping a joined state.
